(19) Europäisches Patentamt
European Patent Office
Office européen des brevets

(11) Veröffentlichungsnummer: **0 507 189 A2**

(12) **EUROPÄISCHE PATENTANMELDUNG**

(21) Anmeldenummer: **92105040.7**

(22) Anmeldetag: **24.03.92**

(51) Int. Cl.[5]: **C07F 9/40**, A01N 57/04, C07F 9/165, C07F 9/24, C07F 9/173, C07F 9/14, C07F 9/20, C07F 9/26

(30) Priorität: **05.04.91 DE 4110972**

(43) Veröffentlichungstag der Anmeldung: **07.10.92 Patentblatt 92/41**

(84) Benannte Vertragsstaaten: **BE CH DE ES FR GB IT LI NL**

(71) Anmelder: **BAYER AG**

**W-5090 Leverkusen 1 Bayerwerk(DE)**

(72) Erfinder: **Krüger, Bernd-Wieland, Dr.**
**Unterboschbach 19**
**W-5060 Bergisch Gladbach 2(DE)**
Erfinder: **Böhm, Stephan, Dr.**
**Carl-Leverkus-Strasse 30**
**W-5090 Leverkusen(DE)**
Erfinder: **Gassen, Karl-Rudolf, Dr.**
**Auenweg 6a**
**W-5068 Odenthal(DE)**
Erfinder: **Marhold, Albrecht, Dr.**
**Carl-Duisberg-Strasse 329**
**W-5090 Leverkusen(DE)**
Erfinder: **Hartwig, Jürgen, Dr.**
**Franz-Esser-Strasse 44**
**W-5090 Leverkusen 3(DE)**
Erfinder: **Erdelen, Christoph, Dr.**
**Unterbüscherhof 22**
**W-5653 Leichlingen(DE)**
Erfinder: **Stendel, Wilhelm, Dr.**
**In den Birken 55**
**W-5600 Wuppertal(DE)**

(54) **O-(2-Fluoralkyl)-S-alkyl-(di)thiophosphor(phosphon)-säureester, Verfahren zu ihrer Herstellung und ihre Verwendung als Schädlingsbekämpfungsmittel.**

(57) Die Erfindung betrifft neue O-(2-Fluoralkyl)-S-alkyl-(di)thiophosphor(phosphon)säureester der allgemeinen Formel (I)

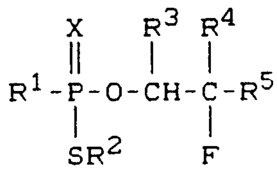

(I)

in welcher

$R^1$ für Alkyl, Alkoxy oder für den Rest

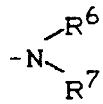

EP 0 507 189 A2

steht, wobei

$R^6$ für Wasserstoff oder Alkyl steht und

$R^7$ für Wasserstoff, Alkyl, -CHO (Formyl) oder gegebenenfalls durch Halogen substituiertes -CO-Alkyl (Acyl) steht,

$R^2$ für gegebenenfalls durch Halogen substituierte Reste der Reihe Alkyl, Alkenyl, Alkinyl, Alkoxyalkyl oder Alkylthioalkyl steht,

$R^3$ für gegebenenfalls durch Halogen und/oder Alkoxy substituiertes Alkyl steht,

$R^4$ für Wasserstoff, Halogen oder gegebenenfalls durch Halogen substituiertes Alkyl steht,

$R^5$ für Wasserstoff, Halogen oder gegebenenfalls durch Halogen substituiertes Alkyl steht und

X für Sauerstoff oder Schwefel steht,

welche als Schädlingsbekämpfungsmittel verwendet werden können.

Die Erfindung betrifft neue O-(2-Fluoralkyl)-S-alkyl-(di)thiophosphor(phosphon)säureester, mehrere Verfahren zu ihrer Herstellung und ihre Verwendung als Schädlingsbekämpfungsmittel, insbesondere als Insektizide, Akarizide und Nematizide.

Es ist bereits bekannt, daß bestimmte O-(2,2,2-Trihalogenethyl)-S-(alkyl)-(di)thiophosphorsäureester, wie z.B. O-(Ethyl)-O-(2,2,2-trichlorethyl)-S-(n-propyl)-thiophosphorsäureester und O-(Ethyl)-O-(2,2,2-trifluorethyl)-S-(n-propyl)-dithiophosphorsäureester zur Schädlingsbekämpfung verwendet werden können (vgl. US-Patentschrift 4 190 653, entsprechend DE-A-27 32 930).

Die insektizide, akarizide und nematizide Wirkung der bekannten Verbindungen ist jedoch, insbesondere bei niedrigen Wirkstoffkonzentrationen und Aufwandmengen, nicht immer bei allen Problemstellungen voll zufriedenstellend.

Es wurden nun neue O-(2-Fluoralkyl)-S-alkyl-(di)thiophosphor(phosphon)säureester der allgemeinen Formel (I)

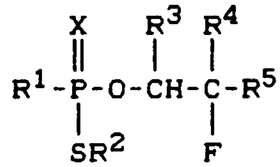

(I)

gefunden, in welcher

$R^1$ für Alkyl, Alkoxy oder für den Rest

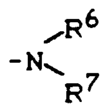

steht, wobei

$R^6$ für Wasserstoff oder Alkyl steht und

$R^7$ für Wasserstoff, Alkyl, -CHO (Formyl) oder gegebenenfalls durch Halogen substituiertes -CO-Alkyl (Acyl) steht,

$R^2$ für gegebenenfalls durch Halogen substituierte Reste der Reihe Alkyl, Alkenyl, Alkinyl, Alkoxyalkyl oder Alkylthioalkyl steht,

$R^3$ für gegebenenfalls durch Halogen und/oder Alkoxy substituiertes Alkyl steht,

$R^4$ für Wasserstoff, Halogen oder gegebenenfalls durch Halogen substituiertes Alkyl steht,

$R^5$ für Wasserstoff, Halogen oder gegebenenfalls durch Halogen substituiertes Alkyl steht und

X für Sauerstoff oder Schwefel steht.

Die Verbindungen der Formel (I) besitzen gegebenenfalls ein oder mehrere Asymmetrie-Zentren. Sie können daher in verschiedenen Isomerenformen vorliegen, die in unterschiedlichen Mengenverhältnissen anfallen können. Die Erfindung betrifft sowohl die Isomerengemische als auch die einzelnen Isomeren.

Im folgenden wird der Einfachheit halber jedoch stets von Verbindungen der Formel (I) gesprochen, obwohl sowohl die reinen Verbindungen als gegebenenfalls auch Gemische mit unterschiedlichen Anteilen an isomeren Verbindungen gemeint sind.

Weiterhin wurde gefunden, daß man die neuen O-(2-Fluoralkyl)-S-alkyl-(di)thiophosphor(phosphon)-säureester der Formel (I) erhält,
wenn man

a) Thio- oder Dithiophosphor(phosphon)säureesterhalogenide der Formel (II)

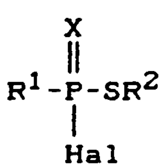

(II)

in welcher

$R^1$, $R^2$ und X die oben angegebene Bedeutung haben und
Hal für Halogen steht,
mit Alkohol-Derivaten der Formel (III)

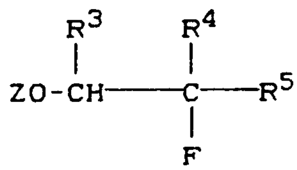

(III)

in welcher
$R^3$, $R^4$ und $R^5$ die oben angegebene Bedeutung haben und
Z für Wasserstoff oder ein Äquivalent eines Alkalimetallions steht,
gegebenenfalls in Gegenwart von Verdünnungsmitteln und gegebenenfalls in Gegenwart von Basen umsetzt,

oder wenn man

b) zur Herstellung von Verbindungen der Formel (I), in welchen $R^1$ für die oben angegebenen Reste, außer Alkyl, steht, in einem ersten Reaktionsschritt Säurehalogenide der Formel (IV)

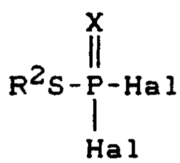

(IV)

in welcher
X, $R^2$ und Hal die oben angegebene Bedeutung besitzen,
mit Verbindungen der Formel

$R^8$-H (V)

in welcher
$R^8$ für die bei $R^1$ angegebenen Reste, außer Alkyl, steht,
gegebenenfalls in Gegenwart von Lösungsmitteln und gegebenenfalls in Gegenwart von Basen umsetzt und das erhaltene Produkt der Formel (VI)

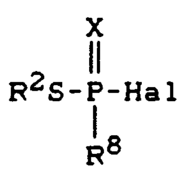

(VI)

in welcher
X, $R^2$, $R^8$ und Hal die oben angegebene Bedeutung haben,
anschließend in einem zweiten Reaktionsschritt mit Verbindungen der Formel (III) gegebenenfalls in Gegenwart von Verdünnungsmitteln und gegebenenfalls in Gegenwart von Basen, umsetzt,

oder wenn man

c) in einem ersten Reaktionsschritt Verbindungen der Formel (VII)

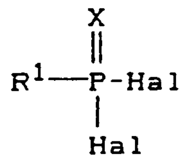

(VII)

in welcher

$R^1$, X und Hal die oben angegebene Bedeutung haben,

mit Verbindungen der Formel (III), gegebenenfalls in Gegenwart von Verdünnungsmitteln und gegebenenfalls in Gegenwart von Basen, umsetzt und die erhaltenen Verbindungen der Formel (VIII)

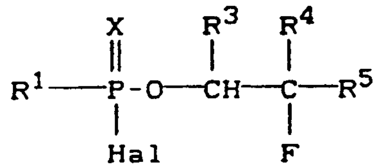

(VIII)

in welcher

$R^1$, $R^3$, $R^4$, $R^5$, X und Hal die oben angegebene Bedeutung haben,

in einem zweiten Reaktionsschritt mit Verbindungen der Formeln (IXa) oder (IXb)

$Z^1$-SH (IXa)

oder

$(Z^1)_2S$ (IXb)

in welcher

$Z^1$ für ein Äquivalent eines Alkalimetallions steht,

gegebenenfalls in Gegenwart eines Verdünnungsmittels, umsetzt und die erhaltenen Verbindungen der Formel (X)

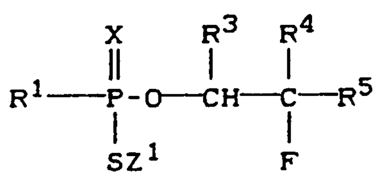

(X)

in welcher

$R^1$, $R^3$, $R^4$, $R^5$, X und $Z^1$ die oben angegebene Bedeutung haben,

mit Verbindungen der Formel (XI)

$R^2$-Hal (XI)

in welcher

$R^2$ und Hal die oben angegebene Bedeutung haben,

gegebenenfalls in Gegenwart eines Verdünnungsmittels und gegebenenfalls in Gegenwart einer Base, umsetzt,

oder wenn man

d) zur Herstellung von Verbindungen der Formel (I), in welchen $R^1$ für Alkyl und X für Schwefel stehen, in einem ersten Reaktionsschritt, Verbindungen der Formel (XII)

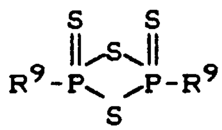

(XII)

in welcher

$R^9$ für Alkyl steht,

mit Alkohol-Derivaten der Formel (III), gegebenenfalls in Gegenwart von Verdünnungsmitteln und gegebenenfalls in Gegenwart von Basen, umsetzt, und die erhaltenen Verbindungen der Formel (XIII)

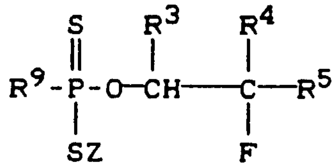

(XIII)

in welcher

$R^9$ und Z die oben angegebene Bedeutung haben,

in einem zweiten Schritt mit Verbindungen der Formel (XI), gegebenenfalls in Gegenwart von Verdünnungsmitteln und gegebenenfalls in Gegenwart von Basen, umsetzt,

oder wenn man

e) zur Herstellung von Verbindungen der Formel (I), in welchen $R^1$ für $-NR^6R^7$ steht, in einem ersten Schritt Verbindungen der Formel (IV) mit Verbindungen der Formel (III), gegebenenfalls in Gegenwart von Verdünnungsmitteln und gegebenenfalls in Gegenwart von Basen, umsetzt und in einem zweiten Schritt die erhaltenen Verbindungen der Formel (XIV)

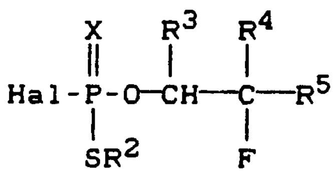

(XIV)

in welcher

X, $R^2$, $R^3$, $R^4$, $R^5$ und Hal die oben angegebene Bedeutung haben,

mit Verbindungen der Formel (XV)

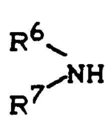

(XV)

in welcher

$R^6$ und $R^7$ die oben angegebene Bedeutung haben,

gegebenenfalls in Gegenwart eines Verdünnungsmittels und gegebenenfalls in Gegenwart einer Base, umsetzt,

oder wenn man

f) zur Herstellung von Verbindungen der Formel (I), in welcher $R^7$ für Formyl oder gegebenenfalls durch Halogen substituiertes Acyl steht, Verbindungen der Formel (XVI)

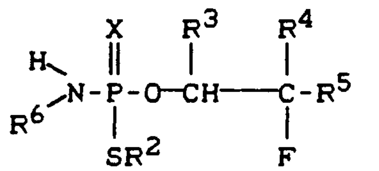

(XVI)

in welcher

X, $R^2$, $R^3$, $R^4$ und $R^5$ die oben angegebene Bedeutung haben und

$R^6$ für Wasserstoff oder Alkyl steht,

mit Verbindungen der Formel (XVII)

$R^{10}$-CO-Y (XVII)

in welcher

$R^{10}$ für Wasserstoff oder gegebenenfalls durch Halogen substituiertes Alkyl steht und

Y für Halogen oder eine andere bei Acylierungsreaktionen abgehende Gruppe steht,

gegebenenfalls in Gegenwart eines Verdünnungsmittels oder gegebenenfalls in Gegenwart einer Base, umsetzt.

Weiterhin wurde gefunden, daß die neuen Verbindungen der allgemeinen Formel (I) eine sehr gute Wirksamkeit als Schädlingsbekämpfungsmittel, insbesondere gegen unerwünschte Arthropoden, wie Insekten und Spinnmilben sowie gegen Nematoden aufweisen. Die neuen Verbindungen stellen somit eine wertvolle Bereicherung der Technik dar.

Die in den allgemeinen Formeln aufgeführten Reste werden, wie folgt, erläutert:

Alkyl bedeutet geradkettiges oder verzweigtes Alkyl mit vorzugsweise 1 bis 6, besonders bevorzugt 1 bis 4 und ganz besonders bevorzugt 1 bis 3 Kohlenstoffatomen, wobei Methyl, Ethyl, n- und i-Propyl sowie n-, i-, sec- und t-Butyl speziell genannt seien.

Für die Alkylteile von -CO-Alkyl, Alkoxy, Alkoxyalkyl und Alkylthioalkyl, gelten die für Alkyl angegebenen Erläuterungen. Als CO-Alkyl sollen speziell -CO-$C_1$-$C_4$-Alkyl und insbesondere -$COCH_3$ sowie -$COC_2H_5$ hervorgehoben werden, Als Alkoxy sollen speziell $C_1$-$C_3$-Alkoxy, insbesondere Methoxy und Ethoxy hervorgehoben werden, Als Alkoxyalkyl sollten speziell $C_1$-$C_4$-Alkoxy-$C_1$-$C_2$-alkyl, insbesondere Methoxymethyl, Ethoxymethyl, Methoxyethyl und Ethoxyethyl hervorgehoben werden.

Die CO-Alkylgruppe kann durch ein oder mehrere, vorzugsweise 1 bis 7, insbesondere 1 bis 5 und besonders bevorzugt 1 bis 3 gleiche oder verschiedene Halogenatome substituiert sein, wobei besonders die $CF_3CO$-Gruppe hervorgehoben werden soll.

Alkenyl und Alkinyl enthalten vorzugsweise 2 bis 6, besonders bevorzugt 2 bis 4 und ganz besonders bevorzugt 3 Kohlenstoffatome sowie vorzugsweise 1 oder 2, besonders bevorzugt 1 Doppel-oder Dreifachbindung. Die Allyl- und Propargylgruppen seien speziell hervorgehoben.

Halogen bedeutet Fluor, Chlor, Brom und Iod. Vorzugsweise bedeutet Halogen Fluor, Chlor und Brom, besonders bevorzugt Fluor und Chlor und ganz besonders bevorzugt Fluor. Als Abgangsatom bedeutet Halogen vorzugsweise Chlor, Brom und Iod, besonders bevorzugt Chlor und Brom und ganz besonders bevorzugt Chlor. Im Falle von durch Halogen substituiertem CO-Alkyl bedeutet Halogen Fluor, Chlor, Brom und/oder Jod, vorzugsweise Fluor und/oder Chlor und besonders bevorzugt Fluor.

Als Alkalimetallionen werden Lithium-, Natrium- und Kaliumionen bevorzugt.

Gegebenenfalls substituierte Reste können einen oder mehrere, vorzugsweise 1 bis 5, besonders bevorzugt 1 bis 3 gleiche oder verschiedene der aufgeführten Substituenten tragen.

$R^1$ steht vorzugsweise für $C_1$-$C_6$-Alkyl, $C_1$-$C_6$-Alkoxy oder -$NR^6R^7$, worin

$R^6$ für Wasserstoff oder $C_1$-$C_6$-Alkyl steht und

$R^7$ für Wasserstoff, $C_1$-$C_6$-Alkyl, HCO- (Formyl) oder gegebenenfalls durch Halogen (vorzugsweise Fluor) substituiertes -CO-$C_1$-$C_4$-Alkyl (Acyl) steht.

$R^2$ steht vorzugsweise für gegebenenfalls durch Halogen substituierte Reste aus der Reihe $C_1$-$C_6$-Alkyl, $C_2$-$C_6$-Alkenyl, $C_2$-$C_6$-Alkinyl, $C_1$-$C_6$-Alkoxy-$C_1$-$C_6$-alkyl oder $C_1$-$C_6$-Alkylthio-$C_1$-$C_6$-alkyl.

$R^3$ steht vorzugsweise für gegebenenfalls durch Halogen und/oder $C_1$-$C_6$-Alkoxy substituiertes $C_1$-$C_6$-Alkyl.

$R^4$ steht vorzugsweise für Wasserstoff oder gegebenenfalls durch Halogen substituierts $C_1$-$C_6$-Alkyl.

$R^5$ steht vorzugsweise für Wasserstoff oder gegebenenfalls durch Halogen substituiertes $C_1$-$C_6$-Alkyl.

Erfindungsgemäß bevorzugt sind die Verbindungen der Formel (I), in welchen eine Kombination dieser vorstehend als vorzugsweise aufgeführten Bedeutungen vorliegt.

$R^1$ steht besonders bevorzugt für $C_1$-$C_4$-Alkyl, $C_1$-$C_4$-Alkoxy oder $-NR^6R^7$, worin

$R^6$ für Wasserstoff oder $C_1$-$C_4$-Alkyl steht und

$R^7$ für Wasserstoff, $C_1$-$C_4$-Alkyl, HCO- oder gegebenenfalls durch Fluor und/oder Chlor (vorzugsweise Fluor) substituiertes -CO-$C_1$-$C_4$-Alkyl steht.

$R^2$ steht besonders bevorzugt für gegebenenfalls durch Halogen substituierte Reste aus der Reihe $C_1$-$C_4$-Alkyl, $C_2$-$C_4$-Alkenyl, $C_2$-$C_4$-Alkinyl, $C_1$-$C_4$-Alkoxy-$C_1$-$C_4$-alkyl oder $C_1$-$C_4$-Alkylthio-$C_1$-$C_4$-alkyl.

$R^3$ steht besonders bevorzugt für gegebenenfalls durch Halogen und/oder $C_1$-$C_4$-Alkoxy substituiertes $C_1$-$C_4$-Alkyl.

$R^4$ steht besonders bevorzugt für Wasserstoff, Halogen oder gegebenenfalls durch Halogen substituiertes $C_1$-$C_4$-Alkyl.

$R^5$ steht besonders bevorzugt für Wasserstoff, Halogen oder gegebenenfalls durch Halogen substituiertes $C_1$-$C_4$-Alkyl.

Erfindungsgemäß besonders bevorzugt sind die Verbindungen der Formel (I), in welchen eine Kombination dieser vorstehend als besonders bevorzugt aufgeführten Bedeutungen vorliegt.

$R^1$ steht ganz besonders bevorzugt für $C_1$-$C_3$-Alkyl, $C_1$-$C_3$-Alkoxy, NH($C_1$-$C_3$-Alkyl), N($C_1$-$C_3$-Alkyl)-($COCF_3$) oder N($C_1$-$C_3$-Alkyl)(COH).

$R^2$ steht ganz besonders bevorzugt für $C_3$-$C_4$-Alkyl (insbesondere für n- und i-Propyl oder sec-Butyl) oder für Allyl.

$R^3$ steht ganz besonders bevorzugt für gegebenenfalls durch Fluor und/oder $C_1$-$C_3$-Alkoxy substituiertes $c_1$-$c_3$-Alkyl.

$R^4$ steht ganz besonders bevorzugt für Wasserstoff oder Fluor.

$R^5$ steht ganz besonders bevorzugt für Wasserstoff oder gegebenenfalls durch Fluor substituiertes $C_1$-$C_3$-Alkyl.

Erfindungsgemäß ganz besonders bevorzugt sind die Verbindungen der Formel (I), in welchen eine Kombination dieser vorstehend als ganz besonders bevorzugt aufgeführten Bedeutungen vorliegt.

Erfindungsgemäß besonders hervorgehoben werden die Verbindungen der Formel (I), in welchen X für Sauerstoff steht.

Erfindungsgemäß besonders hervorgehoben werden auch die Verbindungen der Formel (I), in welchen $R^3$ für gegebenenfalls durch Fluor substituiertes Methyl steht.

Erfindungsgemäß besonders hervorgehoben werden weiterhin die Verbindungen der Formel (I), in welchen $R^4$ für Wasserstoff oder Fluor stehen.

Weiterhin werden erfindungsgemäß besonders hervorgehoben die Verbindungen der Formel (I), in welchen $R^5$ für Wasserstoff, Fluor, Methyl oder Trifluormethyl stehen.

Die oben aufgeführten allgemeinen oder in Vorzugsbereichen aufgeführten Restedefinitionen bzw. Erläuterungen können untereinander, also auch zwischen den jeweiligen Vorzugsbereichen beliebig kombiniert werden. Sie gelten für die Endprodukte sowie für die Vor- und Zwischenprodukte entsprechend.

Im einzelnen seien die folgenden O-(2-Fluoralkyl)-S-alkyl-(di)thiophosphor(phosphon)säureester der allgemeinen Formel (I) beispielhaft genannt:

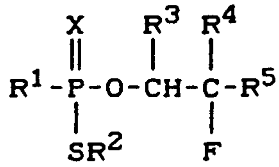

(I)

| $R^1$ | X | $R^2$ | $R^3$ | $R^4$ | $R^5$ |
|---|---|---|---|---|---|
| $CH_3$ | S | $n-C_3H_7$ | $CH_3$ | F | F |
| $C_2H_5$ | S | $n-C_3H_7$ | $CH_3$ | F | F |
| $n-C_3H_7$ | S | $n-C_3H_7$ | $CH_3$ | F | F |
| $i-C_3H_7$ | S | $n-C_3H_7$ | $CH_3$ | F | F |
| $CH_3$ | S | $CH(CH_3)C_2H_5$ | $CH_3$ | F | F |
| $C_2H_5$ | S | $CH(CH_3)C_2H_5$ | $CH_3$ | F | F |
| $n-C_3H_7$ | S | $CH(CH_3)C_2H_5$ | $CH_3$ | F | F |
| $i-C_3H_7$ | S | $CH(CH_3)C_2H_5$ | $CH_3$ | F | F |
| $CH_3O$ | S | $n-C_3H_7$ | $CH_3$ | F | F |
| $C_2H_5O$ | S | $n-C_3H_7$ | $CH_3$ | F | F |
| $C_3H_7O$ | S | $n-C_3H_7$ | $CH_3$ | F | F |
| $CH_3O$ | S | $CH(CH_3)C_2H_5$ | $CH_3$ | F | F |
| $C_2H_5O$ | S | $CH(CH_3)C_2H_5$ | $CH_3$ | F | F |
| $n-C_3H_7O$ | S | $CH(CH_3)C_2H_5$ | $CH_3$ | F | F |
| $C_2H_5$ | S | $CH_2CH=CH_2$ | $CH_3$ | F | F |
| $C_2H_5O$ | S | $CH_2CH=CH_2$ | $CH_3$ | F | F |
| $C_2H_5$ | S | $CH_2-C\equiv CH$ | $CH_3$ | F | F |
| $C_2H_5O$ | S | $CH_2-C\equiv CH$ | $CH_3$ | F | F |

| $R^1$ | X | $R^2$ | $R^3$ | $R^4$ | $R^5$ |
|---|---|---|---|---|---|
| $CH_3$ | O | $n-C_3H_7$ | $CH_3$ | F | F |
| $C_2H_5$ | O | $n-C_3H_7$ | $CH_3$ | F | F |
| $n-C_3H_7$ | O | $n-C_3H_7$ | $CH_3$ | F | F |
| $i-C_3H_7$ | O | $n-C_3H_7$ | $CH_3$ | F | F |
| $CH_3$ | O | $CH(CH_3)C_2H_5$ | $CH_3$ | F | F |
| $C_2H_5$ | O | $CH(CH_3)C_2H_5$ | $CH_3$ | F | F |
| $n-C_3H_7$ | O | $CH(CH_3)C_2H_5$ | $CH_3$ | F | F |
| $i-C_3H_7$ | O | $CH(CH_3)C_2H_5$ | $CH_3$ | F | F |
| $CH_3O$ | O | $n-C_3H_7$ | $CH_3$ | F | F |
| $C_2H_5O$ | O | $n-C_3H_7$ | $CH_3$ | F | F |
| $n-C_3H_7O$ | O | $n-C_3H_7$ | $CH_3$ | F | F |
| $CH_3O$ | O | $CH(CH_3)C_2H_5$ | $CH_3$ | F | F |
| $C_2H_5O$ | O | $CH(CH_3)C_2H_5$ | $CH_3$ | F | F |
| $n-C_3H_7O$ | O | $CH(CH_3)C_2H_5$ | $CH_3$ | F | F |
| $C_2H_5$ | O | $CH_2CH=CH_2$ | $CH_3$ | F | F |
| $C_2H_5O$ | O | $CH_2CH=CH_2$ | $CH_3$ | F | F |
| $C_2H_5$ | O | $CH_2-C\equiv CH$ | $CH_3$ | F | F |
| $C_2H_5O$ | O | $CH_2-C\equiv CH$ | $CH_3$ | F | F |

| $R^1$ | X | $R^2$ | $R^3$ | $R^4$ | $R^5$ |
|---|---|---|---|---|---|
| $CH_3$ | S | n-$C_3H_7$ | $CH_3$ | F | CHF-$CF_3$ |
| $C_2H_5$ | S | n-$C_3H_7$ | $CH_3$ | F | CHF-$CF_3$ |
| n-$C_3H_7$ | S | n-$C_3H_7$ | $CH_3$ | F | CHF-$CF_3$ |
| i-$C_3H_7$ | S | n-$C_3H_7$ | $CH_3$ | F | CHF-$CF_3$ |
| $CH_3$ | S | $CH(CH_3)C_2H_5$ | $CH_3$ | F | CHF-$CF_3$ |
| $C_2H_5$ | S | $CH(CH_3)C_2H_5$ | $CH_3$ | F | CHF-$CF_3$ |
| n-$C_3H_7$ | S | $CH(CH_3)C_2H_5$ | $CH_3$ | F | CHF-$CF_3$ |
| i-$C_3H_7$ | S | $CH(CH_3)C_2H_5$ | $CH_3$ | F | CHF-$CF_3$ |
| $CH_3O$ | S | n-$C_3H_7$ | $CH_3$ | F | CHF-$CF_3$ |
| $C_2H_5O$ | S | n-$C_3H_7$ | $CH_3$ | F | CHF-$CF_3$ |
| n-$C_3H_7O$ | S | n-$C_3H_7$ | $CH_3$ | F | CHF-$CF_3$ |
| $CH_3O$ | S | $CH(CH_3)C_2H_5$ | $CH_3$ | F | CHF-$CF_3$ |
| $C_2H_5O$ | S | $CH(CH_3)C_2H_5$ | $CH_3$ | F | CHF-$CF_3$ |
| n-$C_3H_7O$ | S | $CH(CH_3)C_2H_5$ | $CH_3$ | F | CHF-$CF_3$ |
| $C_2H_5$ | S | $CH_2CH=CH_2$ | $CH_3$ | F | CHF-$CF_3$ |
| $C_2H_5O$ | S | $CH_2CH=CH_2$ | $CH_3$ | F | CHF-$CF_3$ |
| $C_2H_5$ | S | $CH_2-C≡CH$ | $CH_3$ | F | CHF-$CF_3$ |
| $C_2H_5O$ | S | $CH_2-C≡CH$ | $CH_3$ | F | CHF-$CF_3$ |

| $R^1$ | X | $R^2$ | $R^3$ | $R^4$ | $R^5$ |
|---|---|---|---|---|---|
| $CH_3$ | O | $n-C_3H_7$ | $CH_3$ | F | $CHF-CF_3$ |
| $C_2H_5$ | O | $n-C_3H_7$ | $CH_3$ | F | $CHF-CF_3$ |
| $n-C_3H_7$ | O | $n-C_3H_7$ | $CH_3$ | F | $CHF-CF_3$ |
| $i-C_3H_7$ | O | $n-C_3H_7$ | $CH_3$ | F | $CHF-CF_3$ |
| $CH_3O$ | O | $CH(CH_3)C_2H_5$ | $CH_3$ | F | $CHF-CF_3$ |
| $C_2H_5$ | O | $CH(CH_3)C_2H_5$ | $CH_3$ | F | $CHF-CF_3$ |
| $n-C_3H_7$ | O | $CH(CH_3)C_2H_5$ | $CH_3$ | F | $CHF-CF_3$ |
| $i-C_3H_7$ | O | $CH(CH_3)C_2H_5$ | $CH_3$ | F | $CHF-CF_3$ |
| $CH_3$ | O | $CH(CH_3)C_2H_5$ | $CH_3$ | F | $CHF-CF_3$ |
| $C_2H_5$ | O | $CH(CH_3)C_2H_5$ | $CH_3$ | F | $CHF-CF_3$ |
| $n-C_3H_7$ | O | $CH(CH_3)C_2H_5$ | $CH_3$ | F | $CHF-CF_3$ |
| $i-C_3H_7$ | O | $CH(CH_3)C_2H_5$ | $CH_3$ | F | $CHF-CF_3$ |
| $CH_3O$ | O | $n-C_3H_7$ | $CH_3$ | F | $CHF-CF_3$ |
| $C_2H_5O$ | O | $n-C_3H_7$ | $CH_3$ | F | $CHF-CF_3$ |
| $n-C_3H_7O$ | O | $n-C_3H_7$ | $CH_3$ | F | $CHF-CF_3$ |
| $CH_3O$ | O | $CH(CH_3)C_2H_5$ | $CH_3$ | F | $CHF-CF_3$ |
| $C_2H_5O$ | O | $CH(CH_3)C_2H_5$ | $CH_3$ | F | $CHF-CF_3$ |
| $n-C_3H_7O$ | O | $CH(CH_3)C_2H_5$ | $CH_3$ | F | $CHF-CF_3$ |
| $C_2H_5$ | O | $CH_2CH=CH_2$ | $CH_3$ | F | $CHF-CF_3$ |
| $C_2H_5O$ | O | $CH_2CH=CH_2$ | $CH_3$ | F | $CHF-CF_3$ |
| $C_2H_5$ | O | $CH_2-C\equiv CH$ | $CH_3$ | F | $CHF-CF_3$ |
| $C_2H_5O$ | O | $CH_2-C\equiv CH$ | $CH_3$ | F | $CHF-CF_3$ |

| $R^1$ | X | $R^2$ | $R^3$ | $R^4$ | $R^5$ |
|---|---|---|---|---|---|
| $CH_3$ | S | $n-C_3H_7$ | $CH_2F$ | H | F |
| $C_2H_5$ | S | $n-C_3H_7$ | $CH_2F$ | H | F |
| $n-C_3H_7$ | S | $n-C_3H_7$ | $CH_2F$ | H | F |
| $i-C_3H_7$ | S | $n-C_3H_7$ | $CH_2F$ | H | F |
| $CH_3$ | S | $CH(CH_3)C_2H_5$ | $CH_2F$ | H | F |
| $C_2H_5$ | S | $CH(CH_3)C_2H_5$ | $CH_2F$ | H | F |
| $n-C_3H_7$ | S | $CH(CH_3)C_2H_5$ | $CH_2F$ | H | F |
| $i-C_3H_7$ | S | $CH(CH_3)C_2H_5$ | $CH_2F$ | H | F |
| $CH_3O$ | S | $n-C_3H_7$ | $CH_2F$ | H | F |
| $C_2H_5O$ | S | $n-C_3H_7$ | $CH_2F$ | H | F |
| $n-C_3H_7O$ | S | $n-C_3H_7$ | $CH_2F$ | H | F |
| $CH_3O$ | S | $CH(CH_3)C_2H_5$ | $CH_2F$ | H | F |
| $C_2H_5O$ | S | $CH(CH_3)C_2H_5$ | $CH_2F$ | H | F |
| $n-C_3H_7O$ | S | $CH(CH_3)C_2H_5$ | $CH_2F$ | H | F |
| $C_2H_5$ | S | $CH_2CH=CH_2$ | $CH_2F$ | H | F |
| $C_2H_5O$ | S | $CH_2CH=CH_2$ | $CH_2F$ | H | F |
| $C_2H_5$ | S | $CH_2-C\equiv CH$ | $CH_2F$ | H | F |
| $C_2H_5O$ | S | $CH_2-C\equiv CH$ | $CH_2F$ | H | F |

| $R^1$ | X | $R^2$ | $R^3$ | $R^4$ | $R^5$ |
|---|---|---|---|---|---|
| $CH_3$ | O | $n-C_3H_7$ | $CH_2F$ | H | F |
| $C_2H_5$ | O | $n-C_3H_7$ | $CH_2F$ | H | F |
| $n-C_3H_7$ | O | $n-C_3H_7$ | $CH_2F$ | H | F |
| $i-C_3H_7$ | O | $n-C_3H_7$ | $CH_2F$ | H | F |
| $CH_3$ | O | $CH(CH_3)C_2H_5$ | $CH_2F$ | H | F |
| $C_2H_5$ | O | $CH(CH_3)C_2H_5$ | $CH_2F$ | H | F |
| $n-C_3H_7$ | O | $CH(CH_3)C_2H_5$ | $CH_2F$ | H | F |
| $i-C_3H_7$ | O | $CH(CH_3)C_2H_5$ | $CH_2F$ | H | F |
| $CH_3O$ | O | $n-C_3H_7$ | $CH_2F$ | H | F |
| $C_2H_5O$ | O | $n-C_3H_7$ | $CH_2F$ | H | F |
| $n-C_3H_7O$ | O | $n-C_3H_7$ | $CH_2F$ | H | F |
| $CH_3O$ | O | $CH(CH_3)C_2H_5$ | $CH_2F$ | H | F |
| $C_2H_5O$ | O | $CH(CH_3)C_2H_5$ | $CH_2F$ | H | F |
| $n-C_3H_7O$ | O | $CH(CH_3)C_2H_5$ | $CH_2F$ | H | F |
| $C_2H_5$ | O | $CH_2-CH=CH_2$ | $CH_2F$ | H | F |
| $C_2H_5O$ | O | $CH_2-CH=CH_2$ | $CH_2F$ | H | F |
| $C_2H_5$ | O | $CH_2-C\equiv CH$ | $CH_2F$ | H | F |
| $C_2H_5O$ | O | $CH_2-C\equiv CH$ | $CH_2F$ | H | F |

| $R^1$ | X | $R^2$ | $R^3$ | $R^4$ | $R^5$ |
|---|---|---|---|---|---|
| $CH_3$ | S | $n-C_3H_7$ | $CH_3$ | H | H |
| $C_2H_5$ | S | $n-C_3H_7$ | $CH_3$ | H | H |
| $n-C_3H_7$ | S | $n-C_3H_7$ | $CH_3$ | H | H |
| $i-C_3H_7$ | S | $n-C_3H_7$ | $CH_3$ | H | H |
| $CH_3$ | S | $CH(CH_3)C_2H_5$ | $CH_3$ | H | H |
| $C_2H_5$ | S | $CH(CH_3)C_2H_5$ | $CH_3$ | H | H |
| $n-C_3H_7$ | S | $CH(CH_3)C_2H_5$ | $CH_3$ | H | H |
| $i-C_3H_7$ | S | $CH(CH_3)C_2H_5$ | $CH_3$ | H | H |
| $CH_3O$ | S | $n-C_3H_7$ | $CH_3$ | H | H |
| $C_2H_5O$ | S | $n-C_3H_7$ | $CH_3$ | H | H |
| $n-C_3H_7O$ | S | $n-C_3H_7$ | $CH_3$ | H | H |
| $CH_3O$ | S | $CH(CH_3)C_2H_5$ | $CH_3$ | H | H |
| $C_2H_5O$ | S | $CH(CH_3)C_2H_5$ | $CH_3$ | H | H |
| $n-C_3H_7O$ | S | $CH(CH_3)C_2H_5$ | $CH_3$ | H | H |
| $C_2H_5$ | S | $CH_2-CH=CH_2$ | $CH_3$ | H | H |
| $C_2H_5O$ | S | $CH_2-CH=CH_2$ | $CH_3$ | H | H |
| $C_2H_5$ | S | $CH_2-C\equiv CH$ | $CH_3$ | H | H |
| $C_2H_5O$ | S | $CH_2-C\equiv CH$ | $CH_3$ | H | H |

| $R^1$ | X | $R^2$ | $R^3$ | $R^4$ | $R^5$ |
|---|---|---|---|---|---|
| $CH_3$ | O | $n-C_3H_7$ | $CH_3$ | H | H |
| $C_2H_5$ | O | $n-C_3H_7$ | $CH_3$ | H | H |
| $n-C_3H_7$ | O | $n-C_3H_7$ | $CH_3$ | H | H |
| $i-C_3H_7$ | O | $n-C_3H_7$ | $CH_3$ | H | H |
| $CH_3$ | O | $CH(CH_3)C_2H_5$ | $CH_3$ | H | H |
| $C_2H_5$ | O | $CH(CH_3)C_2H_5$ | $CH_3$ | H | H |
| $n-C_3H_7$ | O | $CH(CH_3)C_2H_5$ | $CH_3$ | H | H |
| $i-C_3H_7$ | O | $CH(CH_3)C_2H_5$ | $CH_3$ | H | H |
| $CH_3O$ | O | $n-C_3H_7$ | $CH_3$ | H | H |
| $C_2H_5O$ | O | $n-C_3H_7$ | $CH_3$ | H | H |
| $n-C_3H_7O$ | O | $n-C_3H_7$ | $CH_3$ | H | H |
| $CH_3O$ | O | $CH(CH_3)C_2H_5$ | $CH_3$ | H | H |
| $C_2H_5O$ | O | $CH(CH_3)C_2H_5$ | $CH_3$ | H | H |
| $n-C_3H_7O$ | O | $CH(CH_3)C_2H_5$ | $CH_3$ | H | H |
| $C_2H_5$ | O | $CH_2-CH=CH_2$ | $CH_3$ | H | H |
| $C_2H_5O$ | O | $CH_2-CH=CH_2$ | $CH_3$ | H | H |
| $C_2H_5$ | O | $CH_2-C{\equiv}CH$ | $CH_3$ | H | H |
| $C_2H_5O$ | O | $CH_2-C{\equiv}CH$ | $CH_3$ | H | H |

| $R^1$ | X | $R^2$ | $R^3$ | $R^4$ | $R^5$ |
|---|---|---|---|---|---|
| $CH_3$ | S | $n-C_3H_7$ | $CH_2Cl$ | H | H |
| $C_2H_5$ | S | $n-C_3H_7$ | $CH_2Cl$ | H | H |
| $n-C_3H_7$ | S | $n-C_3H_7$ | $CH_2Cl$ | H | H |
| $i-C_3H_7$ | S | $n-C_3H_7$ | $CH_2Cl$ | H | H |
| $CH_3$ | S | $CH(CH_3)C_2H_5$ | $CH_2Cl$ | H | H |
| $C_2H_5$ | S | $CH(CH_3)C_2H_5$ | $CH_2Cl$ | H | H |
| $n-C_3H_7$ | S | $CH(CH_3)C_2H_5$ | $CH_2Cl$ | H | H |
| $i-C_3H_7$ | S | $CH(CH_3)C_2H_5$ | $CH_2Cl$ | H | H |
| $CH_3O$ | S | $n-C_3H_7$ | $CH_2Cl$ | H | H |
| $C_2H_5O$ | S | $n-C_3H_7$ | $CH_2Cl$ | H | H |
| $n-C_3H_7O$ | S | $n-C_3H_7$ | $CH_2Cl$ | H | H |
| $CH_3O$ | S | $CH(CH_3)C_2H_5$ | $CH_2Cl$ | H | H |
| $C_2H_5O$ | S | $CH(CH_3)C_2H_5$ | $CH_2Cl$ | H | H |
| $n-C_3H_7O$ | S | $CH(CH_3)C_2H_5$ | $CH_2Cl$ | H | H |
| $C_2H_5$ | S | $CH_2-CH=CH_2$ | $CH_2Cl$ | H | H |
| $C_2H_5O$ | S | $CH_2-CH=CH_2$ | $CH_2Cl$ | H | H |
| $C_2H_5$ | S | $CH_2-C\equiv CH$ | $CH_2Cl$ | H | H |
| $C_2H_5O$ | S | $CH_2-C\equiv CH$ | $CH_2Cl$ | H | H |

| $R^1$ | X | $R^2$ | $R^3$ | $R^4$ | $R^5$ |
|---|---|---|---|---|---|
| $CH_3$ | O | $n-C_3H_7$ | $CH_2Cl$ | H | H |
| $C_2H_5$ | O | $n-C_3H_7$ | $CH_2Cl$ | H | H |
| $n-C_3H_7$ | O | $n-C_3H_7$ | $CH_2Cl$ | H | H |
| $i-C_3H_7$ | O | $n-C_3H_7$ | $CH_2Cl$ | H | H |
| $CH_3$ | O | $CH(CH_3)C_2H_5$ | $CH_2Cl$ | H | H |
| $C_2H_5$ | O | $CH(CH_3)C_2H_5$ | $CH_2Cl$ | H | H |
| $n-C_3H_7$ | O | $CH(CH_3)C_2H_5$ | $CH_2Cl$ | H | H |
| $i-C_3H_7$ | O | $CH(CH_3)C_2H_5$ | $CH_2Cl$ | H | H |
| $CH_3O$ | O | $n-C_3H_7$ | $CH_2Cl$ | H | H |
| $C_2H_5O$ | O | $n-C_3H_7$ | $CH_2Cl$ | H | H |
| $n-C_3H_7O$ | O | $n-C_3H_7$ | $CH_2Cl$ | H | H |
| $CH_3O$ | O | $CH(CH_3)C_2H_5$ | $CH_2Cl$ | H | H |
| $C_2H_5O$ | O | $CH(CH_3)C_2H_5$ | $CH_2Cl$ | H | H |
| $n-C_3H_7O$ | O | $CH(CH_3)C_2H_5$ | $CH_2Cl$ | H | H |
| $C_2H_5$ | O | $CH_2-CH=CH_2$ | $CH_2Cl$ | H | H |
| $C_2H_5O$ | O | $CH_2-CH=CH_2$ | $CH_2Cl$ | H | H |
| $C_2H_5$ | O | $CH_2-C\equiv CH$ | $CH_2Cl$ | H | H |
| $C_2H_5O$ | O | $CH_2-C\equiv CH$ | $CH_2Cl$ | H | H |

| $R^1$ | X | $R^2$ | $R^3$ | $R^4$ | $R^5$ |
|---|---|---|---|---|---|
| $NHC_2H_5$ | O | $n-C_3H_7$ | $CH_2F$ | H | H |
| $NHC_2H_5$ | O | $CH(CH_3)C_2H_5$ | $CH_2F$ | H | H |
| $N(COCH_3)C_2H_5$ | O | $n-C_3H_7$ | $CH_2F$ | H | H |
| $N(COCH_3)C_2H_5$ | O | $CH(CH_3)C_2H_5$ | $CH_2F$ | H | H |
| $NHC_2H_5$ | O | $n-C_3H_7$ | $CH_3$ | F | F |
| $NHC_2H_5$ | O | $CH(CH_3)C_2H_5$ | $CH_3$ | F | F |
| $N(COCH_3)C_2H_5$ | O | $n-C_3H_7$ | $CH_3$ | F | F |
| $N(COCH_3)C_2H_5$ | O | $CH(CH_3)C_2H_5$ | $CH_3$ | F | F |

Die als Ausgangsstoffe verwendeten Phosphor(n)säure-Derivate der allgemeinen Formeln (II), (IV), (VII) und (XII) sind bekannt oder können nach bekannten Verfahren hergestellt werden (vgl. "Methoden der organischen Chemie" (Houben-Weyl) Bd. E2, 1982, Georg Thieme Verlag Stuttgart, New York, S. 300 ff.

und S. 487 ff.).

Die Ausgangsstoffe der Formeln (VIII) und (XIV) sind neu und Teil der vorliegenden Erfindung. Sie werden im Verlaufe der Verfahrensvarianten c), d) bzw. e) erhalten. Ihre Isolierung und Reinigung erfolgt nach den üblichen Methoden, z.B. durch Destillation oder Chromatographie.

Die neuen Verbindungen der Formeln (VIII) und (XIV) können unter der folgenden Formel (XVIII) zusammengefaßt werden

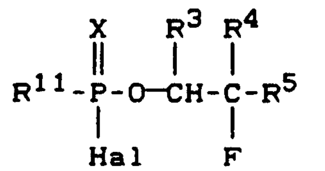

(XVIII)

in welcher

$R^{11}$ die Bedeutung von $R^1$ hat oder für $-S-R^2$ steht und

$R^1$, $R^2$, $R^3$, $R^4$, $R^5$, Hal und X die oben angegebene Bedeutung haben.

Die bei den erfindungsgemäßen Verfahren als Ausgangsstoffe verwendeten Alkohol-Derivate der Formel (III) sind bekannt oder können nach bekannten Methoden erhalten werden (vergleiche z.B. R.N. Hazeldine et. al., J. Fluorine Chemistry, 28, 291 (1985); H. Gilman et al., J. Am. Chem. Soc; 70, 128 (1948); L.S. Bogut Iarskaya et al., Zh. Org. Khim., 9, 296 (1973); E.D. Bergmann et al., J. Chem. Soc., 1958, 2259).

Die übrigen als Ausgangsstoffe zu verwendenden Verbindungen sind bekannt oder können nach allgemein bekannten Methoden hergestellt werden.

Als Verdünnungsmittel für die erfindungsgemäße Verfahrensvariante a) kommen praktisch alle inerten organischen Verdünnungsmittel und ihre Mischungen in Frage. Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether, wie Diethyl- und Dibutylether, Cycoldimethylether und Diglycoldimethylether, Tetrahydrofuran und Dioxan, Ketone, wie Aceton, Methylethyl-, Methylisopropyl- und Methylisobutylketon, Ester, wie Essigsäuremethylester und -ethylester, Nitrile, wie z.B. Acetonitril und Propionitril, Amide, wie z.B. Dimethylformamid, Dimethylacetamid und N-Methylpyrrolidon sowie Dimethylsulfoxid, Tetramethylensulfon und Hexamethylphosphorsäuretriamid.

Zur Durchführung der erfindungsgemäßen Verfahrensvarianten a) setzt man auf 1 Mol Phosphor-Derivat der Formel (II) 1 bis 2 Mol, vorzugsweise 1,0 bis 1,8 Mol Alkohol-Verbindung der Formel (III) ein.

Als Verdünnungsmittel für die erfindungsgemäßen Verfahrensvarianten b), c), d), e) und f) können praktisch alle inerten organischen Verdünnungsmittel verwendet werden. Vorzugsweise werden die Verdünnungsmittel verwendet, die im Zusammenhang mit der Beschreibung der erfindungsgemäßen Verfahrensvarianten a) genannt wurden.

Die Verfahrensvarianten a), b), c), d), e) und f) können gegebenenfalls in Gegenwart von Basen durchgeführt werden. Als Basen können alle üblichen Basen Verwendung finden. Besonders bevorzugt werden Alkalicarbonate und -alkoholate, wie Natrium- und Kaliumcarbonat, Natrium- und Kaliummethylat bzw. -ethylat, ferner aliphatische, aromatische oder heterocyclische Amine, beispielsweise Collidin, Triethylamin, Trimethylamin, Dimethylanilin, Dimethylbenzylamin, Tetraethylendiamin (DABCO) und Pyridin. Vorzugsweise werden die Basen in einer Menge hinzugefügt, die zum Abfangen des gebildeten Halogenwasserstoffes erforderlich ist.

Die erfindungsgemäßen Verfahrensvarianten a), b), c), d), e) und f) werden im allgemeinen bei Temperaturen zwischen -70 °C und +150 °C durchgeführt. Bevorzugt wird der Bereich zwischen -40 °C und 110 °C.

Die Umsetzungen werden im allgemeinen bei Normaldruck durchgeführt.

Zur Durchführung der erfindungsgemäßen Verfahrensvariante b) setzt man auf 1 Mol der Verbindung der Formel (IV) 1 bis 1,6 Mol, vorzugsweise 1 bis 1,4 Mol der Verbindung der Formel (V) und 1 bis 2, vorzugsweise 1 bis 1,8 Mol der Alkohol-Verbindung der Formel (III) ein.

Zur Durchführung der erfindungsgemäßen Verfahrensvariante c) setzt man auf 1 Mol der Verbindung der Formel (VII) 1 bis 1,6 Mol, vorzugsweise 1 bis 1,4 Mol, der Alkohol-Verbindung der Formel (III), 1 bis 2, vorzugsweise 1 bis 1,8 Mol, der Verbindungen der Formeln (IXa) bzw. (IXb) und 1 bis 2, vorzugsweise 1 bis 1,8 Mol, der Alkylhalogenide der Formel (XI) ein.

Zur Durchführung der Verfahrensvariante d) setzt man auf 1 Mol der Verbindung der Formel (XII) 2 bis 3 Mol, vorzugsweise 2 bis 2,5 Mol der Alkohol-Verbindung der Formel (III) und 2 bis 3, vorzugsweise 2 bis

2,5 Mol der Alkylhalogenide der Formel (XI) ein.

Zur Durchführung der erfindungsgemäßen Verfahrensvariante e) setzt man auf 1 Mol der Verbindung der Formel (IV) 1 bis 2 Mol, vorzugsweise 1 bis 1,3 Mol der Alkohol-Verbindung der Formel (III) und für den zweiten Reaktionsschritt auf 1 Mol des Monohalogenides der Formel (XIV) 1 bis 4 Mol, vorzugsweise 1 bis 1,5 Mol des Amins der Formel (XV) ein.

Zum Erhalt der Verbindungen der Formel (I), in welcher $R^1$ für gegebenenfalls durch Halogen substituiertes Acyl oder Formylamino steht, werden in Verfahrensvariante f) auf 1 Mol der Phosphorverbindung der Formel (XVI) 1 bis 2, vorzugsweise 1 bis 1,3 Mol der Verbindung der Formel (XVII) eingesetzt. Außer Carbonsäurehalogeniden, vorzugsweise den Chloriden, werden bei der Verfahrensvariante f) auch andere Carbonsäurederivate, wie Carbonsäureanhydride, z.B. Acetanhydrid oder Trifluoressigsäureanhydrid vorteilhaft eingesetzt.

Die Aufarbeitung der erfindungsgemäßen Verbindungen geschieht nach üblichen Methoden, Die neuen Verbindungen fallen zum Teil in Form von Ölen an, die sich zum Teil nicht unzersetzt destillieren lassen, jedoch durch sogenanntes "Andestillieren", d.h. durch längeres Erhitzen unter vermindertem Druck auf mäßig erhöhte Temperaturen von den letzten flüchtigen Anteilen befreit und auf diese Weise gereinigt werden, Zu ihrer Charakterisierung kann der Brechungsindex dienen.

Die erfindungsgemäßen Wirkstoffe eignen sich bei guter Pflanzenverträglichkeit und günstiger Warmeblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Neteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die erfindungsgemäßen Wirkstoffe der Formel (I) zeichnen sich durch eine hohe insektizide, akarizide und vor allem nematizide Wirksamkeit aus. Sie lassen sich insbesondere gegen pflanzenschädigende Insekten, wie beispielsweise gegen die Raupen der Kohlschabe (Plutella maculipennis) oder gegen die Larven der Meerrettichblattkäfer (Phaedon cochleariae), sowie gegen pflanzenschädigende Milben, wie beispielsweise gegen die gemeine Spinnmilbe (Tetranychus urticae) einsetzen. Sie eignen sich daneben hervorragend zur Bekämpfung von Bodeninsekten und Nematoden und lassen sich beispielsweise zur Bekämpfung von Phorbia antiqua-Maden oder von Nematoden der Gattung Meloidogyne incognita einsetzen. Auch eine gute wurzelsystemische Wirkung, beispielsweise gegen Phaedon cochleariae-Larven ist hervorzuheben. Die nematizide Wirkung der erfindungsgemäßen Wirkstoffe läßt sich auch im in vitro-Test beispielsweise gegen endoparasitisch lebende Nematoden der Gattung Caenorhabditis elegans bestätigen.

Außerdem besitzen die erfindungsgemäßen Wirkstoffe der Formel (I) eine hohe Wirkung gegen Hygiene- und Vorratsschädlinge und lassen sich beispielsweise zur Bekämpfung der orientalischen Schabe (Blatta orientalis) oder zur Bekämpfung des gemeinen Kornkäfers (Sitophilus granarius) einsetzen. Darüber hinaus lassen sich die erfindungsgemäßen Wirkstoffe mit besonders gutem Erfolg zur Bekämpfung von parasitisch lebenden Warmblüterschädlingen, (sowie Ekto- als auch Endoparasiten), wie beispielsweise gegen die Larven der Goldfliege (Lucilia cuprina), gegen Rinderzecken (Boophilus microplus), gegen Räudemilben (Psoroptes ovis) gegen Stechfliegen (Stomoxys calcitrans) oder gegen die Weideviehfliege (Musca autumnalis) einsetzen.

Daneben besitzen die erfindungsgemäßen Wirkstoffe der Formel (I) auch eine gute fungizide Wirksamkeit und lassen sich zur Bekämpfung von Pflanzenkrankheiten wie beispielsweise gegen den Erreger der Reisfleckenkrankheit (Pyricularia oryzae) oder gegen Schorf- und Botrytis-Erreger einsetzen.

In entsprechenden Aufwandmengen zeigen die erfindungsgemäßen Wirkstoffe der Formel (I) darüber hinaus eine herbizide Wirksamkeit.

Die erfindungsgemäßen Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmneben-Formulierungen.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon,

Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxy-methylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Die erfindungsgemäßen Verbindungen eignen sich auch in besonderer Weise zur Behandlung von vegativem und generativem Vermehrungsmaterial, wie z.B. von Saatgut von Getreide, Mais, Gemüse u.s.w. oder von Zwiebeln, Stecklingen u.s.w.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die erfindungsgemäßen Wirkstoffe eignen sich auch zur Bekämpfung von Insekten, Milben, Zecken u.s.w. auf dem Gebiet der Tierhaltung und Viehzucht, wobei durch die Bekämpfung der Schädlinge bessere Ergebnisse, z.B. höhere Milchleistungen, höheres Gewicht, schöneres Tierfell, längere Lebensdauer u.s.w. erreicht werden können.

Die Anwendung der erfindungsgemäßen Wirkstoffe geschieht auf diesen Gebiet in bekannter Weise, wie durch äußerliche Anwendung in Form beispielsweise des Tauchens (Dippen), Sprühens (Sprayen), Aufgießens (pour-on and spot-on) und des Einpuderns.

Im vorliegenden Text beziehen sich alle Prozentangaben, wo nichts anderes aufgeführt wird, auf Gewichtsprozente.

Die Herstellung der erfindungsgemäßen Verbindungen soll anhand der folgenden Beispiele erläutert werden.

Beispiel 1

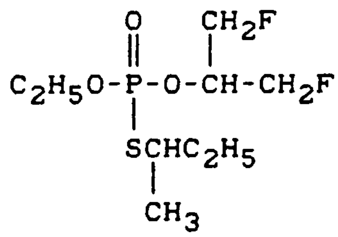

5,4 g 1,3-Difluorpropanol-2 (0,05 Mol) werden in 50 ml Tetrahydrofuran gelöst und bei -70 ° C mit 20 ml einer 2,5 molaren n-Butyllithium-Lösung versetzt. Man rührt zwei Stunden bei 20 ° C und tropft dann 12,5 g (0,05 Mol) Thiophosphorsäure-O-ethyl-S-(1-methyl-propyl)-diesterchlorid zur Reaktionsmischung. Man erwärmt 4 Tage auf 40 ° C, filtriert den Feststoff ab und entfernt flüchtige Bestandteile im Wasserstrahlvakuum. Anschließend wird in Hexan: Essigsäureethylester (8:2 Volumenteile) aufgenommen und über Kieselgel chromatographiert. Man erhält 9,0 g Thiophosphorsäure-O-ethyl-O-(2-fluor-1-fluormethyl-ethyl)-S-(1-methyl-propyl)-triester (65 % der Theorie) mit einem Siedebereich Kp. 110-115 ° C bei 0,3 mbar.

Beispiel 2

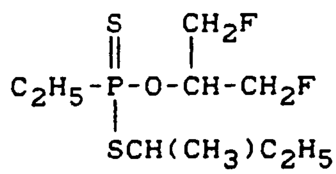

6,3 g Ethantetrathiophosphonsäuredithioanhydrid (0,025 Mol) werden in 50 ml Toluol suspendiert und bei 20 ° C mit 5,6 g (0,058 Mol) 1,3-Difluorpropanol-2 versetzt. Man rührt 30 Minuten bei 20 ° C und tropft dann 10 ml Triethylamin zur Reaktionsmischung. Nach Abklingen der exothermen Reaktion (bis 40 ° C) wird noch zwei Stunden auf 50 ° C erwärmt und dann bei 20 ° C mit 8,5 g (0.06 Mol) 1-Methylpropylbromid und 0,5 g DABCO (Tetraethylendiamin) versetzt. Man erwärmt einen Tag auf 90 ° C und arbeitet wie in Beispiel 1 beschrieben auf. Man erhält 9,4 g Ethandithiophosphonsäure-O-(2-fluor-1-fluormethylethyl)-S-(1-methyl-propyl)-diester (68 % der Theorie).

Beispiel 3

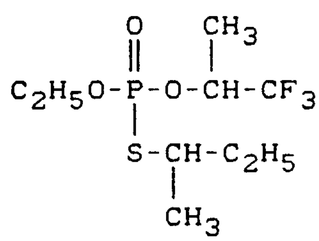

41,5 g Thiophosphorsäure-S-(1-methyl-propyl)-ester-dichlorid (0,2 Mol) werden in 1 l Toluol bei 0 ° C mit 31 ml (0,21 Mol) Triethylamin versetzt. Dann tropft man langsam 9,3 g (0,2 Mol) Ethanol in 20 ml Toluol zwischen -5 und 0 ° C zur Reaktionslösung. Man rührt 4 h bei 20 ° C, gibt dann 31 ml Triethylamin zur Reaktionsmischung und tropft anschließend 22 g (0,22 Mol) 1,1,1-Trifluorpropanol-2 hinzu. Man rührt 24 h bei 60 ° C und extrahiert dann mit einer Methylenchlorid/Wasser-Mischung. Die organische Phase wird getrocknet, eingeengt und destilliert. Man erhält 33,4 g (57 % der Theorie) Thiophosphorsäure-O-ethyl-O-(1-methyl-2,2,2-trifluorethyl)-S-(1-methyl-propyl)-triester mit einem Siedebereich Kp. 70-80 ° C bei 0,8 mbar.

Beispiel 4

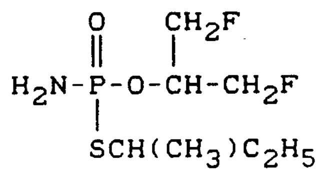

84 g (0,4 Mol) Thiophosphonsäure-S-(1-methylpropyl)-ester-dichlorid werde in 3 l Hexan bei 0 ° C mit 49,7 g Triethylamin (0,48 Mol) versetzt. Anschließend tropft man bei 0 ° C 43 g 1-(Fluormethyl)-2-fluorethanol (0,41 Mol einer 90 %igen Qualität) zur Reaktionsmischung. Man rührt 4 h bei 20 ° C, filtriert den Feststoff ab und fügt anschließend 30 g $NH_3$(g) (1,8 Mol) zur Lösung. Es wird dann erneut filtriert, eingeengt und der Rückstand durch Filtration über Kieselgel gereinigt (Laufmittel Hexan:Aceton = 7:3 Volumenteile) Ausbeute:
31 g (33 % der Theorie)
$n_D^{20}$ = 1.4752.

Beispiel 5

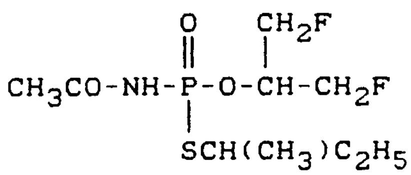

7,5 g (0,03 Mol) Thiophosphorsäure-O-(1-fluormethyl-2-fluorethyl)-ester-S-(1-methyl-propyl)-ester-amid werden in 100 ml Pyridin gelöst und dann mit 0,5 g 4-Pyrrolidino-pyridin und 3,4 g (0,033 Mol) Acetanhydrid versetzt. Man erwärmt 24 h auf 50-60 ° C, engt ein und filtriert über Kieselgel (Hexan: Aceton = 7:3 Volumenteile).
Ausbeute: 6,1 g (70 % der Theorie)
$n_D^{20}$ = 1,4770
Analog wurden hergestellt:

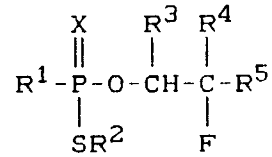

(I)

| Beispiel-Nr. | $R^1$ | X | $R^2$ | $R^3$ | $R^4$ | $R^5$ | $n_D^{20}$ |
|---|---|---|---|---|---|---|---|
| 6 | $C_2H_5O$ | O | $CH(CH_3)C_2H_5$ | $CH_3$ | H | $CH_3$ | 1.5028 |
| 7 | $C_2H_5O$ | S | $C_3H_7$-n | $CH_2F$ | H | H | 1.4867 |
| 8 | $C_2H_5$ | S | $CH_2C{\equiv}CH$ | $CH_2F$ | H | H | 1.5315 |
| 9 | $C_2H_5O$ | O | $C_3H_7$-n | $CH_2Cl$ | H | H | 1.4691 |
| 10 | $C_2H_5O$ | O | $C_3H_7$-n | $CH_2F$ | H | H | 1.4506 |
| 11 | $C_2H_5O$ | O | $C_3H_7$-n | $CH_3$ | H | $CH_3$ | 1.4444 |
| 12 | $C_2H_5O$ | O | $C_3H_7$-n | $CH_3$ | H | $CF_3$ | |
| 13 | $C_2H_5O$ | O | $CH(CH_3)C_2H_5$ | $CH_3$ | H | $CF_3$ | |
| 14 | $C_2H_5O$ | S | $C_3H_7$-n | $CH_3$ | H | $CF_3$ | |
| 15 | $C_2H_5O$ | S | $CH(CH_3)C_2H_5$ | $CH_3$ | H | $CF_3$ | |
| 16 | $C_2H_5O$ | O | $C_3H_7$-n | $CH_3$ | F | F | 1.4230 |
| 17 | $C_2H_5O$ | S | $C_3H_7$-n | $CH_3$ | F | F | |
| 18 | $C_2H_5O$ | S | $CH(CH_3)C_2H_5$ | $CH_3$ | F | F | |
| 19 | $OC_2H_5$ | O | n-$C_3H_7$ | $CH_3$ | F | $CF_3$ | |

(Fortsetzung)

| Beispiel-Nr. | $R^1$ | X | $R^2$ | $R^3$ | $R^4$ | $R^5$ | $n_D^{20}$ |
|---|---|---|---|---|---|---|---|
| 20 | $C_2H_5$ | S | $CH_2CH(CH_3)_2$ | $CH_2F$ | H | H | 1.5028 |
| 21 | $C_2H_5O$ | O | $CH_2CH(CH_3)_2$ | $CH_2F$ | H | H | 1.4495 |
| 22 | $C_2H_5NH$ | O | $CH(CH_3)C_2H_5$ | $CH_2F$ | H | H | 1.4662 |
| 23 | $C_2H_5O$ | O | $n-C_3H_7$ | $CH_2-OCH_3$ | H | H | 1.4554 |
| 24 | $C_2H_5O$ | O | $n-C_3H_7$ | $CH_3$ | F | $CHF-CH_3$ | 1.3956 |
| 25 | $C_2H_5O$ | O | $CH(CH_3)C_2H_5$ | $CH_3$ | F | $CHF-CH_3$ | 1.4057 |
| 26 | $C_2H_5O$ | O | $CH(CH_3)C_2H_5$ | $CH_3$ | F | $CF_3$ | 1.4115 |
| 27 | $C_2H_5O$ | O | $CH(CH_3)C_2H_5$ | $CH_3$ | F | $CH_2Cl$ | 1.4518 |
| 28 | $C_2H_5O$ | O | $n-C_3H_7$ | $CH_3$ | F | $CH_2Cl$ | 1.5045 |
| 29 | $C_2H_5NH$ | O | $n-C_3H_7$ | $CH_2F$ | H | H | 1.4647 |
| 30 | $C_2H_5O$ | O | $CH_2CH(CH_3)_2$ | $CH_3$ | F | F | 1.4295 |
| 31 | $C_2H_5NH$ | O | $CH(CH_3)(C_2H_5)$ | $CH_3$ | F | F | 1.4339 |
| 32 | $C_2H_5NH$ | O | $n-C_3H_7$ | $CH_3$ | F | F | 1.4325 |

Die biologische Wirkung der erfindungsgemäßen Verbindungen soll anhand der folgenden Beispiele erläutert werden.

Beispiel A

Grenzkonzentrations-Test / Bodeninsekten

Testinsekt: Diabrotica balteata - Larven im Boden
Lösungsmittel: 3 Gewichtsteile Aceton
Emulgator: 1 Gewichtsteil Alkylarylpolyglykol ether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (mg/l) angegeben wird. Man füllt den Boden in 0,5 l Töpfe und läßt diese bei 20 ° C stehen.

Sofort nach dem Ansatz werden je Topf 6 vorgekeimte Maiskörner gelegt. Nach 2 Tagen werden in den behandelten Boden die entsprechenden Testinsekten gesetzt. Nach weiteren 7 Tagen wird der Wirkungsgrad des Wirkstoffes durch Auszählen der toten und lebenden Testinsekten in % bestimmt. Der Wirkungsgrad ist 100 %, wenn alle Testinsekten abgetötet worden sind, er ist 0 % wenn noch genau so viele Testinsekten leben wie in der unbehandelten Kontrolle.

Bei diesem Test zeigten z.B. die Verbindungen der Herstellungsbeispiele 9 und 10 bei einer beispielhaften Wirkstoffkonzentration von 10 ppm einen Wirkungsgrad von 100 %.

Beispiel B

Grenzkonzentrations-Test / Bodeninsekten

Testinsekt: Phorbia antiqua-Maden (im Boden)
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm ( = mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist O %, wenn noch genau so viele Testinsekten leben wie bei der unbehandelten Kontrolle.

Bei diesem Test zeigte z.B. die Verbindung des Herstellungsbeispiels 9 bei einer beispielhaften Konzentration von 10 ppm einen Wirkungsgrad von 100 %.

Beispiel C

Saatgutbehandlungs-Test / Bodeninsekten

Testinsekt: Diabrotica balteata - Larven im Boden
Testpflanze: Zea mays
Lösungsmittel: 1 Gewichtsteil Aceton
Trägermaterial: Kaolin

Zur Herstellung einer zweckmäßigen Wirkstoffzubereitung löst man den Wirkstoff in Aceton und vermischt 1 Gewichtsteil Wirkstoff/Aceton mit 5 Gewichtsteilen Kaolin. Das Mais-Saatgut wird mit dieser Wirkstoffzubereitung mit den geforderten Aufwandmengen behandelt. Die Mais-Aussaat erfolgt in 0,5 l Töpfchen mit standardisierten Boden bei 20 ° C Raumtemperatur.

Nach 1 Tag werden ca. 30 Diabrotica-Larven in jeden Topf gegeben. Nach weiteren 7 Tagen wird der Wirkungsgrad des Wirkstoffes durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie in der unbehandelten Kontrolle.

Bei diesem Test zeigte z.B. die Verbindung des Herstellungsbeispiels 10 bei einer beispielhaften Aufwandmenge von 1 g Wirkstoff je 1 kg Saatgut einen Wirkungsgrad von 100 %.

Beispiel D

Grenzkonzentrations-Test / Nematoden

Testnematode: Meloidogyne incognita

Lösungsmittel: 3 Gewichtsteile Aceton

Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27° C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Bei diesem Test zeigten z.B. die Verbindungen der Herstellungsbeispiele 10 und 23 bei einer beispielhaften Wirkstoffkonzentration von 10 ppm einen Wirkungsgrad von 100 %.

## Beispiel E

Grenzkonzentrations-Test

Testnematode: Globodera rostochiensis

Lösungsmittel: 3 Gewichtsteile Aceton

Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, pflanzt Kartoffeln ein und hält die Töpfe bei einer Gewächshaus-Temperatur von 18° C.

Nach sechs Wochen werden die Kartoffelwurzeln auf Zysten untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Bei diesem Test zeigte z.B. die Verbindung des Herstellungsbeispiels 10 bei einer beispielhaften Wirkstoffkonzentration von 10 ppm einen Wirkungsgrad von 100 %.

## Beispiel F

Myzus-Test

Lösungsmittel: 7 Gewichtsteile Aceton

Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea), die stark von der Pfirsichblattlaus (Myzus persicae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Blattläuse abgetötet wurden; 0 % bedeutet, daß keine Blattläuse abgetötet wurden.

Bei diesem Test zeigten z.B. die Verbindungen der Herstellungsbeispiele 9, 10 und 23 bei einer Wirkstoffkonzentration von 0,1 % eine Abtötung von über 90 %.

## Beispiel G

Spodoptera-Test

Lösungsmittel: 7 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen des Eulenfalters (Spodoptera frugiperda) besetzt, solange die Blätter noch feucht sind.

Nach der gewünschten Zeit wird die Abtötung in % bestimmt. Dabei bedeutet 100 %, daß alle Raupen abgetötet wurden; 0 % bedeutet, daß keine Raupen abgetötet wurden.

Bei diesem Test zeigten z.B. die Verbindungen der Herstellungsbeispiele 9, 10 und 23 bei einer Wirkstoffkonzentration von 0,1 % eine Abtötung von 100 %.

Beispiel H

Fliegen, Kornkäfer, Schaben / Test auf abtötende Wirkung

| | |
|---|---|
| Testobjekt: | Adulte ♂♂ ♀♀ Musca domestica, Sitophilus granarius, Blattella germanica. |
| Testverfahren: | Filterpapierscheiben (Ø 9 cm) werden in Plastikschalen mit je 2,0 ml einer Wirkstofflösung in Aceton der jeweils gewünschten Konzentration der Testsubstanz imprägniert. Nach Trocknung der Filter werden die Schalen verschlossen und 24 Stunden nach Ansatz mit $CO_2$-betäubten Arthropoden beschickt. Insektenzahl: Musca domestica 10, Sitophilus granarius 10, Blattella germanica 5 Die Registrierung der Wirkung erfolgt zu bestimmten Zeiten nach Aufsetzen der Arthropoden (5 - 360 Minuten bzw. 1 - 7 Tage p.a. nach Aufsetzen der Arthropoden) |
| Testkriterium; | Als Kriterium für den Eintritt der Wirkung gilt das Erreichen des sog. adynamische Stadiums (keine Lebenszeichen) der Testarthropoden. |
| Bewertung: | 100 % Wirkung = alle Arthropoden tot<br>0 9 Wirkung = keine Arthropoden tot. |

Bei diesem Test zeigte bei allen Testinsekten z.B. die Verbindung des Herstellungsbeispiels 9 bei einer Wirkstoffkonzentration von 1000 ppm. eine Wirkung von 100 %.

Beispiel I

Test mit Lucilia cuprina resistent-Larven

Emulgator: 35 Gewichtsteile Ethylenglykolmonomethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Gemisches und verdünnnt das so erhaltene Konzentrat mit Wasser auf die jeweils gewünschte Konzentration.

Etwa 20 Lucilia cuprina res.-Larven werden in ein Teströhrchen gebracht, welches ca. 1 $cm^3$ Pferdefleisch und 0,5 ml der Wirkstoffzubereitung enthält. Nach 24 Stunden wird der Abtötungsgrad bestimmt.

Bei diesem Test zeigten z.B. bei einer Wirkstoffkonzentration von 1000 ppm die Verbindung des Herstellungsbeispiels 7 einen Abtötungsgrad von 100 %.

## Patentansprüche

**1.** O-(2-Fluoralkyl)-S-alkyl-(di)-thiophosphor(phosphon)säureester der allgemeinen Formel (I)

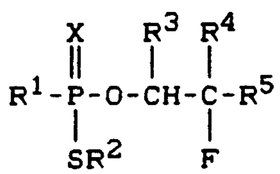

(I)

in welcher

$R^1$ für Alkyl, Alkoxy oder für den Rest

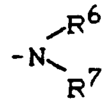

steht, wobei

$R^6$ für Wasserstoff oder Alkyl steht und

$R^7$ für Wasserstoff, Alkyl, -CHO (Formyl) oder gegebenenfalls durch Halogen substituiertes -CO-Alkyl (Acyl) steht,

$R^2$ für gegebenenfalls durch Halogen substituierte Reste der Reihe Alkyl, Alkenyl, Alkinyl, Alkoxyalkyl oder Alkylthioalkyl steht,

$R^3$ für gegebenenfalls durch Halogen und/oder Alkoxy substituiertes Alkyl steht,

$R^4$ für Wasserstoff, Halogen oder gegebenenfalls durch Halogen substituiertes Alkyl steht,

$R^5$ für Wasserstoff, Halogen oder gegebenenfalls durch Halogen substituiertes Alkyl steht und

X für Sauerstoff oder Schwefel steht.

**2.** Verbindungen gemäß Anspruch 1, in welcher

$R^1$ für $C_1$-$C_6$-Alkyl, $C_1$-$C_6$-Alkoxy oder $-NR^6R^7$ steht, worin

$R^6$ für Wasserstoff oder $C_1$-$C_6$-Alkyl steht und

$R^7$ für Wasserstoff, $C_1$-$C_6$-Alkyl, HCO-(Formyl) oder gegebenenfalls durch Halogen substituiertes -CO-$C_1$-$C_4$-Alkyl (Acyl) steht,

$R^2$ für gegebenenfalls durch Halogen substituierte Reste an der Reihe $C_1$-$C_6$-Alkyl, $C_2$-$C_6$-Alkenyl, $C_2$-$C_6$-Alkinyl, $C_1$-$C_6$-Alkoxy-$C_1$-$C_6$-alkyl oder $C_1$-$C_6$-Alkylthio-$C_1$-$C_6$-alkyl steht,

$R^3$ für gegebenenfalls durch Halogen und/oder $C_1$-$C_6$-Alkoxy substituiertes $C_1$-$C_6$-Alkyl steht,

$R^4$ für Wasserstoff oder gegebenenfalls durch Halogen substituiertes $C_1$-$C_6$-Alkyl steht,

$R^5$ für Wasserstoff oder gegebenenfalls durch Halogen substituiertes $C_1$-$C_6$-Alkyl steht, und

X für Sauerstoff oder Schwefel steht.

**3.** Verbindungen gemäß Anspruch 1, in welcher

$R^1$ für $C_1$-$C_4$-Alkyl, $C_1$-$C_4$-Alkoxy oder $-NR^6R^7$ steht, worin

$R^6$ für Wasserstoff oder $C_1$-$C_4$-Alkyl steht und

$R^7$ für Wasserstoff, $C_1$-$C_4$-Alkyl, HCO- oder gegebenenfalls durch Fluor und/oder Chlor substituiertes -CO-$C_1$-$C_4$-Alkyl steht,

$R^2$ für gegebenenfalls durch Halogen substituierte Reste aus der Reihe $C_1$-$C_4$-Alkyl, $C_2$-$C_4$-Alkenyl, $C_2$-$C_4$-Alkinyl, $C_1$-$C_4$-Alkoxy-$C_1$-$C_4$-Alkyl oder $C_1$-$C_4$-Alkylthio-$C_1$-$C_4$-alkyl steht,

$R^3$ für gegebenenfalls durch Halogen und/oder $C_1$-$C_4$-Alkoxy substituiertes $C_1$-$C_4$-Alkyl steht,

$R^4$ für Wasserstoff, Halogen oder gegebenenfalls durch Halogen substituiertes $C_1$-$C_4$-Alkyl steht,

$R^5$ für Wasserstoff, Halogen oder gegebenenfalls durch Halogen substituiertes $C_1$-$C_4$-Alkyl steht und

X für Sauerstoff oder Schwefel steht.

**4.** Verbindungen gemäß Anspruch 1, in welchen

$R^1$ für $C_1$-$C_3$-Alkyl, $C_1$-$C_3$-Alkoxy, NH($C_1$-$C_3$-Alkyl), N($C_1$-$C_3$-Alkyl) ($COCF_3$) oder N($C_1$-$C_3$-Alkyl)-(COH) steht,

$R^2$ für $C_3$-$C_4$-Alkyl oder Allyl steht,

$R^3$ für gegebenenfalls durch Fluor und/oder $C_1$-$C_3$-Alkoxy substituiertes $C_1$-$C_3$-Alkyl steht.

$R^4$ für Wasserstoff oder Fluor steht,

$R^5$ für Wasserstoff oder gegebenenfalls durch Fluor substituiertes $C_1$-$C_3$-Alkyl steht und

X für Sauerstoff oder Schwefel steht.

**5.** Verbindungen gemäß den Ansprüchen 1 bis 4, in welchen X für Sauerstoff steht.

**6.** Stoffe der Formeln

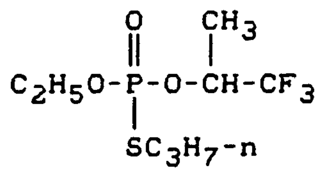 , 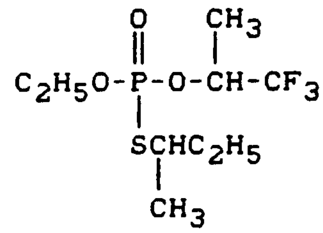 ,

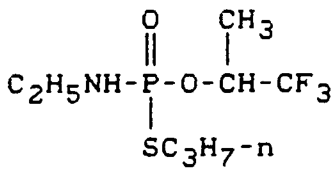 und 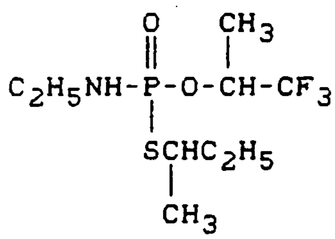 .

7. Verfahren zur Herstellung von O-(2-Fluoralkyl)-S-alkyl-(di)thiophosphor(phosphon)säureestern der allgemeinen Formel (I)

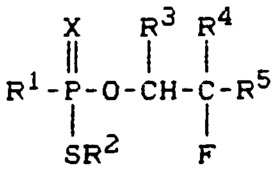

(I)

in welcher

$R^1$ für Alkyl, Alkoxy oder für den Rest

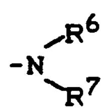

steht, wobei

$R^6$ für Wasserstoff oder Alkyl steht und

$R^7$ für Wasserstoff, Alkyl, -CHO (Formyl) oder gegebenenfalls durch Halogen substituiertes -CO-Alkyl (Acyl) steht,

$R^2$ für gegebenenfalls durch Halogen substituierte Reste der Reihe Alkyl, Alkenyl, Alkinyl, Alkoxyalkyl oder Alkylthioalkyl steht,

$R^3$ für gegebenenfalls durch Halogen und/oder Alkoxy substituiertes Alkyl steht,

$R^4$ für Wasserstoff, Halogen oder gegebenenfalls durch Halogen substituiertes Alkyl steht,

$R^5$ für Wasserstoff, Halogen oder gegebenenfalls durch Halogen substituiertes Alkyl steht und

X für Sauerstoff oder Schwefel steht,

dadurch gekennzeichnet, daß man

a) Thio- oder Dithiophosphor(phosphon)saureesterhalogenide der Formel (II)

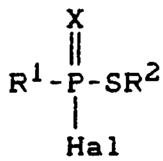 (II)

in welcher

$R^1$, $R^2$ und X die oben angegebene Bedeutung haben und
Hal für Halogen steht,
mit Alkohol-Derivaten der Formel (III)

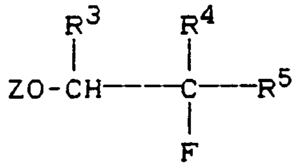 (III)

in welcher

$R^3$, $R^4$ und $R^5$ die oben angegebene Bedeutung haben und
Z für Wasserstoff oder ein Äquivalent eines Alkalimetallions steht,
gegebenenfalls in Gegenwart von Verdünnungsmitteln und gegebenenfalls in Gegenwart von Basen umsetzt,
oder daß man
b) zur Herstellung von Verbindungen der Formel (I), in welchen $R^1$ für die oben angegebenen Reste, außer Alkyl steht, in einem ersten Reaktionsschritt Säurehalogenide der Formel (IV)

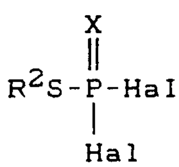 (IV)

in welcher
X, $R^2$ und Hal die oben angegebene Bedeutung besitzen,
mit Verbindungen der Formel

$R^8$-H (V)

in welcher
$R^8$ für die bei $R^1$ angegebenen Reste, außer Alkyl, steht,

gegebenenfalls in Gegenwart von Lösungsmitteln und gegebenenfalls in Gegenwart von Basen umsetzt und das erhaltene Produkt der Formel (VI)

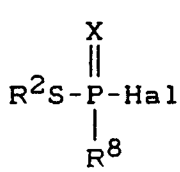 (VI)

in welcher

X, $R^2$, $R^8$ und Hal die oben angegebene Bedeutung haben,

anschließend in einem zweiten Reaktionsschritt mit Verbindungen der Formel (III) gegebenenfalls in Gegenwart von Verdünnungsmitteln und gegebenenfalls in Gegenwart von Basen, umsetzt,

oder daß man

c) in einem ersten Reaktionsschritt Verbindungen der Formel (VII)

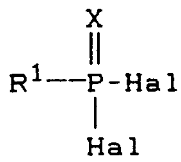

(VII)

in welcher

$R^1$, X und Hal die oben angegebene Bedeutung haben,

mit Verbindungen der Formel (III), gegebenenfalls in Gegenwart von Verdünnungsmitteln und gegebenenfalls in Gegenwart von Basen, umsetzt und die erhaltenen Verbindungen der Formel (VIII)

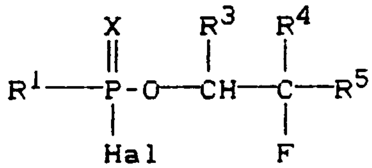

(VIII)

in welcher

$R^1$, $R^3$, $R^4$, $R^5$, X und Hal die oben angegebene Bedeutung haben,

in einem zweiten Reaktionsschritt mit Verbindungen der Formeln (IXa) oder (IXb)

$Z^1$-SH (IXa)

oder

$(Z^1)_2S$ (IXb)

in welcher

$Z^1$ für ein Äquivalent eines Alkalimetallions steht,

gegebenenfalls in Gegenwart eines Verdünnungsmittels, umsetzt und die erhaltenen Verbindungen der Formel (X)

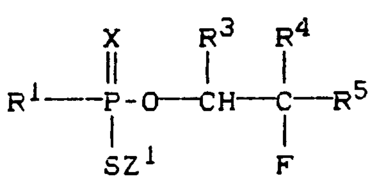

(X)

in welcher

$R^1$, $R^3$, $R^4$, $R^5$, X und $Z^1$ die oben angegebene Bedeutung haben,

mit Verbindungen der Formel (XI)

$R^2$-Hal (XI)

in welcher
$R^2$ und Hal die oben angegebene Bedeutung haben,
gegebenenfalls in Gegenwart eines Verdünnungsmittels und gegebenenfalls in Gegenwart einer Base, umsetzt,
oder daß man
d) zur Herstellung von Verbindungen der Formel (I), in welchen $R^1$ für Alkyl und X für Schwefel stehen, in einem ersten Reaktionsschritt, Verbindungen der Formel (XII)

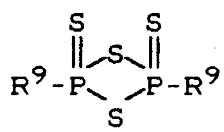

(XII)

in welcher
$R^9$ für Alkyl steht,
mit Alkohol-Derivaten der Formel (III), gegebenenfalls in Gegenwart von Verdünnungsmitteln und gegebenenfalls in Gegenwart von Basen, umsetzt, und die erhaltenen Verbindungen der Formel (XIII)

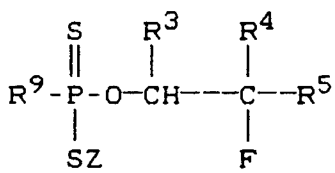

(XIII)

in welcher
$R^9$ und Z die oben angegebene Bedeutung haben,
in einem zweiten Schritt mit Verbindungen der Formel (XI), gegebenenfalls in Gegenwart von Verdünnungsmitteln und gegebenenfalls in Gegenwart von Basen, umsetzt,
oder daß man
e) zur Herstellung von Verbindungen der Formel (I), in welchen $R^1$ für $-NR^6R^7$ steht, in einem ersten Schritt Verbindungen der Formel (IV) mit Verbindungen der Formel (III), gegebenenfalls in Gegenwart von Verdünnungsmitteln und gegebenenfalls in Gegenwart von Basen, umsetzt und in einem zweiten Schritt die erhaltenen Verbindungen der Formel (XIV)

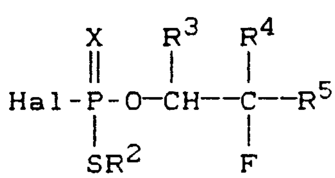

(XIV)

in welcher

X, $R^2$, $R^3$, $R^4$, $R^5$ und Hal die oben angegebene Bedeutung haben,

mit Verbindungen der Formel (XV)

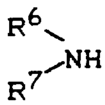

(XV)

in welcher

$R^6$ und $R^7$ die oben angegebene Bedeutung haben,

gegebenenfalls in Gegenwart eines Verdünnungsmittels und gegebenenfalls in Gegenwart einer Base, umsetzt,

oder daß man

f) zur Herstellung von Verbindungen der Formel (I), in welcher $R^7$ für Formyl oder gegebenenfalls durch Halogen substituiertes Acyl steht, Verbindungen der Formel (XVI)

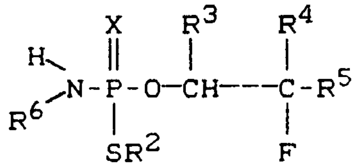

(XVI)

in welcher

X, $R^2$, $R^3$, $R^4$ und $R^5$ die oben angegebene Bedeutung haben und

$R^6$ für Wasserstoff oder Alkyl steht,

mit Verbindungen der Formel (XVII)

$R^{10}$-CO-Y (XVII)

in welcher

$R^{10}$ für Wasserstoff oder gegebenenfalls durch Halogen substituiertes Alkyl steht und

Y für Halogen oder eine andere bei Acylierungsreaktionen abgehende Gruppe steht,

gegebenenfalls in Gegenwart eines Verdünnungsmittels oder gegebenenfalls in Gegenwart einer Base, umsetzt.

**8.** Schädlingsbekämpfungsmittel, gekennzeichnet durch einen Gehalt an mindestens einer Verbindung der Formel (I), gemäß den Ansprüchen 1 oder 7.

**9.** Verwendung von Verbindungen der Formel (I) gemäß den Ansprüchen 1 oder 7 zur Bekämpfung von Schädlingen.

**10.** Verfahren zur Bekämpfung von Schädlingen, dadurch gekennzeichnet, daß man Verbindungen der Formel (I) gemäß den Ansprüchen 1 oder 7 auf Schädlinge und/oder ihren Lebensraum einwirken läßt.

**11.** Verfahren zur Herstellung von Schädlingsbekämpfungsmitteln, dadurch gekennzeichnet, daß man Verbindungen der Formel (I) gemäß den Ansprüchen 1 oder 7 mit Streckmitteln und/oder oberflächenaktiven Mitteln vermischt.

**12.** Verbindungen der Formel (XVIII)

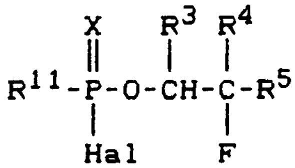

(XVIII)

in welcher

$R^{11}$ die Bedeutung von $R^1$ hat oder für $-S-R^2$ steht und

$R^1$, $R^2$, $R^3$, $R^4$, $R^5$ und X die in Anspruch 1 angegebene Bedeutung haben, und

Hal für Halogen steht.